# EUROPEAN PATENT SPECIFICATION

(11) **EP 2 168 718 B1**
(45) Date of publication and mention of the grant of the patent: **18.04.2012**
(21) Application number: 08777741.3
(22) Date of filing: 01.07.2008
(51) Int. Cl.: B23Q 16/10, B23Q 1/28

(54) **INDEX DEVICE**
TEILERVORRICHTUNG
DISPOSITIF D'INDEX

(30) Priority: 12.07.2007 JP 2007183611
(43) Date of publication of application: 31.03.2010
(73) Proprietor: Tsudakoma Kogyo Kabushiki Kaisha, Kanazawa-shi, Ishikawa-ken 921-8650 (JP)
(72) Inventor: TATSUDA, Yoshinori, Kanazawa-shi Ishikawa-ken 921-8650 (JP)
(74) Representative: Samson & Partner
(86) International application number: PCT/JP2008/061890
(87) International publication number: WO 2009/008286

(56) References cited:
- DE-B3-102005 026 152
- JP-A- 2000 107 963
- JP-A- 2002 103 181
- JP-U- 02 104 946

## Description

### Technical Field

The present invention relates to an indexing device, and more particularly to a clamp mechanism that causes a thin-wall section of a clamp sleeve to bulge by supply of pressure fluid, so that the thin-wall section is pressed to a rotary shaft and fixes the rotary shaft after the indexing device indexes a desirable rotational position of the rotary shaft (rotational angle).

### Background Art

Patent Document 1 discloses an index table for pivoting and indexing. The index table includes a frame having a through hole (inner peripheral surface) at its center, a rotary table having a table surface and supported rotatably relative to the frame, and a clamp device (clamp sleeve) disposed in the space between the frame and the rotary table. The rotary shaft integral with the rotary table is driven by a worm mechanism to perform indexing, the worm mechanism driven by a motor.

The clamp device (clamp sleeve) has a cylindrical portion that is fitted around the entire outer circumference of the rotary table (cylinder section). The cylindrical portion has an annular groove dented inward from the outer periphery and extending along the rotary shaft. The cylindrical portion is housed in a housing hole provided in the frame. In this housed state, the annular groove and the frame define a pressure chamber therebetween. When pressure oil is supplied to the pressure chamber:, the clamp device causes a thin-wall deformation portion of the clamp sleeve to bulge inward in the radial direction, i.e., toward the cylinder section of the rotary table. The bulging thin-wall deformation portion presses the entire circumference of the rotary shaft at an indexed position (angle), and clamps the rotary shaft with a desirable braking torque. Thus, the rotary shaft becomes non-rotatable and the rotary table integral with the rotary shaft is held at the indexed position (angle).

In such a clamp device, the clamp mechanism presses the entire circumference of the rotary shaft. The clamp mechanism can uniformly clamp the entire circumference of the rotary shaft at a position close to a machining position, as compared with the other types of clamp mechanisms, such as a disc clamp mechanism, which presses and holds a disc rotatable with a rotary table, by a plurality of pistons arranged in the circumferential direction and driven with fluid pressure. Thus, slight waviness can be prevented from occurring during cutting a workpiece held on the rotary table.

However, in the above clamp device, the clamp mechanism may have smaller clamping force than the other clamp mechanisms. In the case of a device having a worm mechanism as the device disclosed in Patent Document 1, a self-locking mechanism included in the worm mechanism can compensate the insufficiency in clamping force. Otherwise, the clamping force may be more seriously insufficient in the case of a device, which does not include the self-lock mechanism in a rotational drive source but a rotary shaft thereof is directly driven by a driving motor of a direct-drive type (so called DD motor). In either case, to address the problem, for example, the pressure of pressure fluid such as pressure oil may be increased to generate a desirable braking torque. However, this may shorten the life of a fluid circuit element such as a seal member. Alternatively, the thin-wall section of the clamp sleeve may be increased in axial length to increase a contact area between the thin-wall section and the rotary shaft and hence to increase a frictional force. However, since the length of the rotary shaft has to be increased accordingly, the rotary shaft tends to be inclined during a clamping operation. Desirable machining accuracy may not be obtained, and the entire indexing device may be increased in size.
Patent Document 1: Japanese Unexamined Patent Application Publication No. 2002-103181

DE 10 2005 026152 83 discloses an indexing device according to the preamble of independent claim 1.

### Disclosure of Invention

### Problems to be Solved by the Invention

Accordingly, an object of the present invention is to obtain a desirable braking force by a clamp mechanism of an indexing device, that is, a mechanism that causes a thin-wall deformation portion of a clamp sleeve to bulge by supply of pressure fluid and to be pressed to a rotary shaft, and hence the mechanism brakes the rotary shaft, without the pressure of the pressure fluid being increased. Means for Solving the Problems

The present invention provides an indexing device, in which a clamp sleeve extending along a rotary shaft is disposed in the space between the rotary shaft and a housing hole of a frame, and the clamp sleeve bulges toward the rotary shaft by supply of pressure fluid, so as to non-rotatably hold the rotary shaft. A pressure-receiving cylindrical portion extending in parallel to the rotary shaft is provided around the rotary shaft integrally with the frame. A cylinder-like portion extending along the rotary shaft is provided integrally with the rotary shaft in the space between the pressure-receiving cylindrical portion and the clamp sleeve. When the clamp sleeve bulges, the cylinder-like portion is pinched by the frame (in particular, by both of the housing hole and the pressure-receiving cylindrical portion).

To be more specific, an indexing device (100) includes a rotary shaft (39) driven by an indexing motor (33) to perform indexing; a frame (31b) having a housing hole (31d), in which the rotary shaft (39) is housed, and rotatably supporting the rotary shaft (39); and a clamp sleeve (34a) having a clamping through hole (34e1), and an annular groove (34a1) continuously provided around an outer periphery of the clamp sleeve (34a) and defining a part of a pressure chamber (34d), which supplies pressure fluid. The clamp sleeve (34a) is disposed in a space between the housing hole (31d) of the frame (31b) and the rotary shaft (39). The clamp sleeve (34a) is integrally attached to the frame (31b).

In the above indexing device (100), a pressure-receiving cylindrical portion (38a1) is disposed in a space between the rotary shaft (39) and the clamp sleeve (34a) and integrally attached to the frame (31b). The pressure-receiving cylindrical portion (38a1) separated in a radial direction from the clamping through hole (34e1) of the clamp sleeve (34a) and having a pressure-receiving peripheral surface (38a5) extending in parallel to the rotary shaft (39). Also, a flange member (39b) extending outward in the radial direction is integrally provided with the rotary shaft (39), and a cylinder-like portion (38b) is disposed in a space between the clamping through hole (34e1) of the clamp sleeve (34a) and the pressure-receiving cylindrical portion (38a1) and integrally attached to the flange member (39b). The cylinder-like portion (38b) extends in parallel to the rotary shaft (39) and is deformable in a bending manner (claim 1).

Preferably, the pressure-receiving cylindrical portion (38a1) integral with the frame (31b) includes a plurality of pressure-receiving cylindrical parts (38a11, 38a12), which are attached to the frame (31b) so as to be separated from each other in the radial direction. The cylinder-like portion (38b) integral with the flange member (39b) includes a plurality of deformable cylinder-like parts (38b11, 38b12), which are attached to the flange member (39b) so as to be separated from each other in the radial direction, the cylinder-like parts (38b11, 38b12) being deformable in a bending manner. The pressure-receiving cylindrical parts (38a11, 38a12) and the deformable cylinder-like parts (38b11, 38b12) are alternately arranged with slight gaps interposed among the parts in the radial direction (claim 2).

### Advantages

With the device according to claim 1, the cylinder-like portion (38b) is deformed toward the rotary shaft (39) in a bending manner when the clamp sleeve (34a) bulges because of the fluid supply to the pressure chamber (34d), and the rotary shaft (39) integral with the cylinder-like portion (38b) are pinched by the clamp sleeve (34a) integral with the frame (31b) and the pressure-receiving cylindrical portion (38b) from both of the inner and outer sides. Thus, the rotary shaft (39) becomes clamped. Accordingly, with the present invention, the cylinder-like portion integral with the rotary shaft contacts the two inner and outer surfaces of the frame. The contact area in which a frictional force is produced is increased, and with this increase, a larger braking torque (clamping force) can be obtained. Machining accuracy and machining stability can be reliably provided (claim 1).

In addition, the device includes the cylinder-like portion and the pressure-receiving cylindrical portions formed of the plurality of cylinder-like parts. More specifically, the cylinder-like portion (38b) integral with the flange member (39b) includes the plurality of deformable cylinder-like parts (38b11, 38b12), which are attached to the flange member (39b) so as to be separated from each other in the radial direction, the cylinder-like parts (38b11, 38b12) being deformable in a bending manner. Also, the pressure-receiving cylindrical parts (38a11, 38a12) and the deformable cylinder-like parts (38b11, 38b12) are alternately arranged with slight gaps interposed among the parts in the radial direction. Accordingly, when the clamp sleeve bulges, a braking torque is produced at each of peripheral surfaces at which the pressure-receiving cylindrical parts (38a11, 38a12) contact the cylinder-like parts (38b11, 38b12). Thus, a further larger braking torque can be obtained in the entire device (claim 2).

### Brief Description of Drawings

[Fig. 1] Fig. 1 is a perspective view showing an embodiment of a machine tool (machining head) to which an indexing device according to the present invention is applied.
[Fig. 2] Fig. 2 is an enlarged cross-sectional view partly showing a support head component in the machining head when viewed from the front.
[Fig. 3] Fig. 3 illustrates the support head component in the machining head, Figs. 3(A) and 3(B) being side views each showing a state in which a cover is removed, Fig. 3(A) being an enlarged side view showing the state in which a cover 18a is removed from a leg segment 30a when viewed from the outside.
[Fig. 4] Fig. 4 is an enlarged cross-sectional view partly showing a supporting system of the machining head.
[Fig. 5] Fig. 5 is an enlarged cross-sectional view showing a primary portion of an indexing device according to the present invention included in the machining head of a machine tool.
[Fig. 6] Fig. 6 is an enlarged cross-sectional-view showing a primary portion of an indexing device according to another embodiment of the present invention.
[Fig. 7] Fig. 7 is an enlarged cross-sectional view showing a primary portion of an indexing device according to still another embodiment of the present invention. Reference Numerals

- 1: machine tool
- 10: machining head
- 20: spindle unit
- 21: spindle
- 23: housing
- 24: port
- 25: spindle motor
- 25a: rotor
- 25b: stator
- 27: bearing
- 30: first support head component
- 31a: housing (frame)
- 31d: housing hole
- 32: indexing rotary shaft
- 33: indexing motor
- 34: clamp mechanism
- 34a: clamp sleeve
- 34b: pressure-receiving member
- 34d: pressure chamber
- 34e1: clamping through hole
- 37: rotary joint
- 37a: distributor
- 38: rotary joint
- 38a: distributor
- 38a1: pressure-receiving cylindrical portion
- 38a11: pressure-receiving cylindrical part
- 38a12: pressure-receiving cylindrical part
- 38a5: pressure-receiving peripheral surface
- 38b: cylinder-like portion
- 38b11: cylinder-like part
- 38b12: cylinder-like part
- 39: rotary shaft
- 39a: shaft member
- 39b: flange member
- 50: second support head component
- 100: indexing device

### Best Modes for Carrying Out the Invention

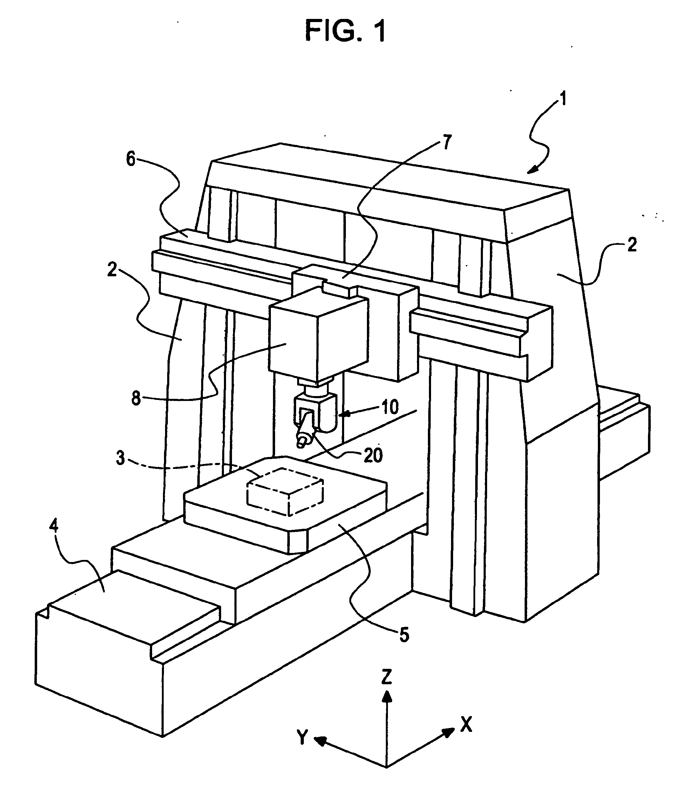

Figs. 1 to 5 illustrate a double-housing machine tool 1 as an embodiment of a compound processing machine. The machine tool 1 is also called machining center. An indexing device 100 according to the present invention is mounted on a machining head 10 called U-axis head of the machine tool 1.

Referring to Fig. 1, the machine tool 1 includes a pair of left and right columns 2 attached to a bed 4, a horizontal cross rail 6 movable vertically (in Z-axis direction) on the pair of columns 2, a saddle 7 movable horizontally (in Y-axis direction) on the cross rail 6, a ram 8 movable in the Z-axis direction on the saddle 7, and a table 5 movable horizontally in the front-back direction (in X-axis direction) on the bed 4.

The ram 8 supports the machining head 10 pivotably around the vertical axis. The machining head 10 supports a spindle unit 20 rotatably around the horizontal axis. The spindle unit 20 drives a spindle 21.

When the machine tool 1 machines a workpiece 3 retained on the table 5, the machine tool 1 moves the table 5, the cross rail 6, the saddle 7, and the ram 8 under numerical control based on a preliminarily set program. The machining head 10 indexes the angular position of the spindle unit 20 by using the indexing device 100 according to the present invention, and determines the posture of a tool (not shown) that is attached for the workpiece 3 to a desirable posture. Thus, in the machine tool 1, the tool can be set at appropriate angles for machining various surfaces subjected to machining of the workpiece 3, so that the workpiece 3 can be cut into complicated shapes.

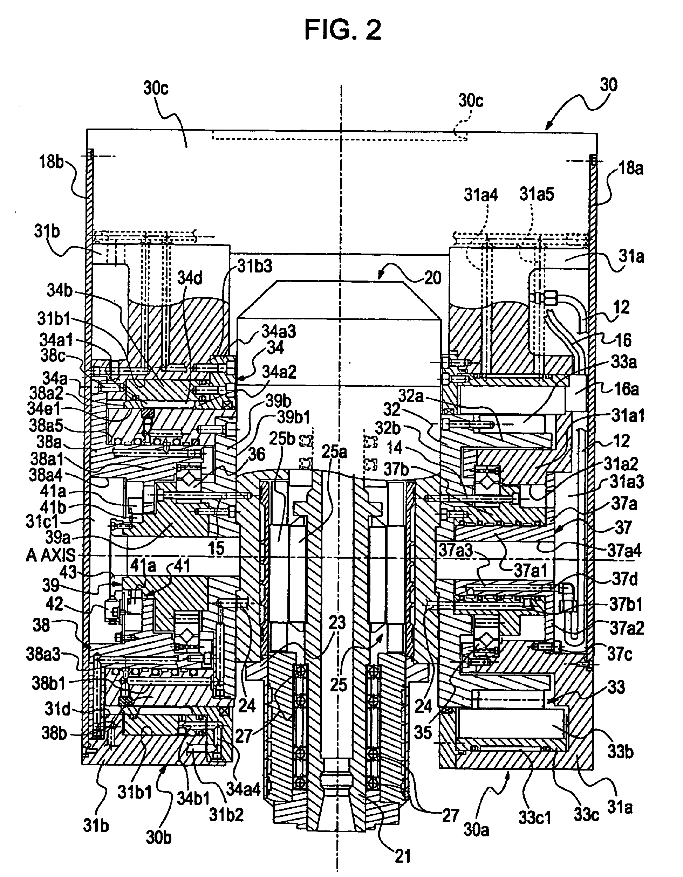

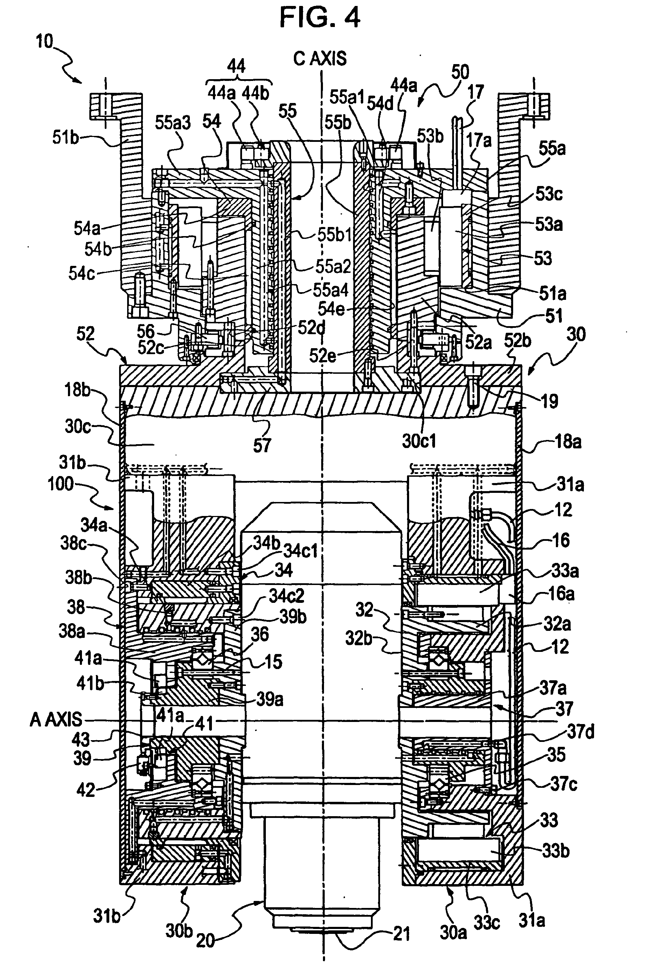

Figs. 2 to 4 illustrate specific configurations of the machining head 10 and the spindle unit 20. The spindle unit 20 is supported by a first support head component 30 as shown in Fig. 2, and the first support head component 30 is supported by a second support head component 50 as shown in Fig. 4.

In Fig. 2, the spindle unit 20 is a spindle head having a motor built therein. The spindle unit 20 includes a spindle motor 25 of the direct-drive type typically called DD motor. The spindle unit 20 rotates the spindle 21 at a high speed by the rotational power of the spindle motor 25. The spindle 21 extends through a housing 23 of the spindle unit 20. The spindle motor 25 is arranged to surround the spindle 21. The spindle motor 25 includes a rotor 25a fitted around the spindle 21 and a stator 25b provided to face the outer peripheral surface of the rotor 25a. The spindle 21 is rotatably supported within the housing 23 by a plurality of bearings 27, for example, angular contact bearings, arranged at both ends of the spindle motor 25.

When an exciting current is supplied to the stator 25b of the spindle motor 25, an excitation force is generated between the stator 25b and the rotor 25a. The rotor 25a is rotated by the excitation force. The rotor 25a rotates the spindle 21. The spindle 21 rotates a tool (not shown) attached to a tapered hole at the distal end of the spindle 21.

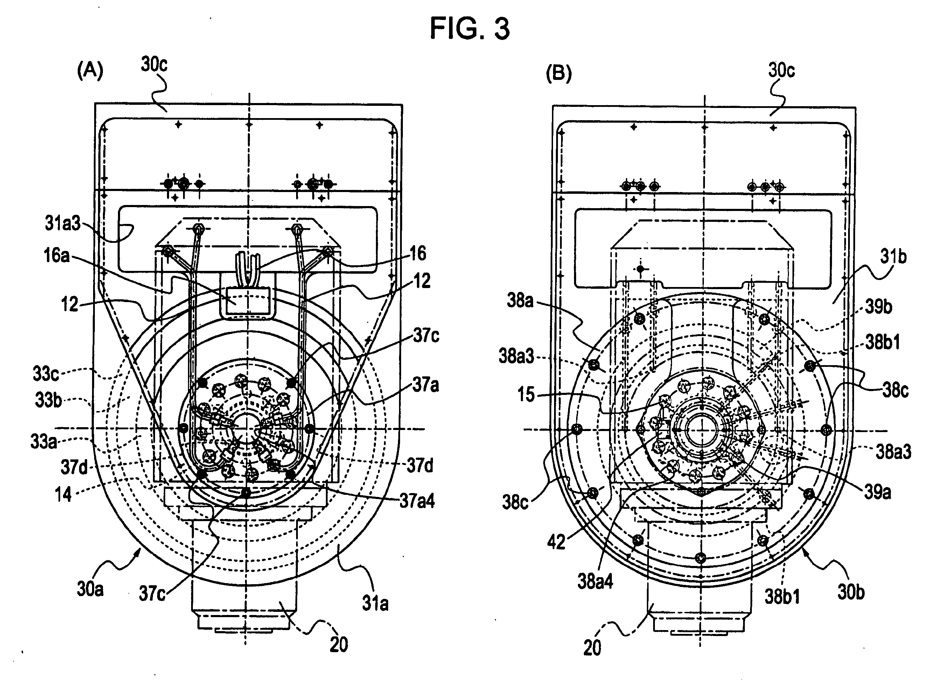

Referring to Figs. 3 to 5 in addition to Fig. 2, the first support head component 30 rotatably supports the spindle unit 20 between a pair of leg segments 30a, 30b, which are attached to a supporting segment 30c, through a pair of left and right rotary shafts 32, 39. Also, the first support head component 30 rotates the spindle unit 20 around the A axis as the common center line of the pair of rotary shafts 32, 39, and indexes the angular position for the machining posture of the spindle unit 20. For indexing the angular position of the spindle unit 20, the one leg segment 30a of the pair of leg segments 30a, 30b includes therein an indexing motor 33, and the other leg segment 30b includes therein a clamp mechanism 34 for holding the indexed angular position.

The indexing motor 33 and the clamp mechanism 34 define a primary portion of the indexing device 100 according to the present invention. The pair of rotary shafts 32, 39 are attached to both side surfaces of the spindle unit 20 so as to be orthogonal to the rotary axis line of the spindle 21 of the spindle unit 20. The rotary shaft 32 in the leg segment 30a, together with the indexing motor 33, is included in a driving section during indexing. The rotary shaft 39 in the leg segment 30b is included in a driven section during indexing. The rotary shaft 39 also serves as a clamping section when the indexed angular position is held. The indexing motor 33 serves as a DD motor similar to the spindle motor 25.

The inner configuration of the one leg segment 30a will be described below. The leg segment 30a has, as a main body, a housing 31a. The housing 31a includes, for example, a rotor 33a and a stator 33b that constitute the indexing motor 33, the indexing rotary shaft 32 that supports the spindle unit 20, a bearing (for example, cross roller bearing) 35 for rotatably supporting the rotary shaft 32, and a rotary joint 37 for supplying fluid for machining to the spindle unit 20.

The side of the housing 31a proximate to the leg segment 30b has a large opening through which the motor 33 and the rotary shaft 32 are inserted. Moreover, the housing 31a also has a cylindrical portion 31a1 extending along the A axis from the outer side surface of the housing 31a. The cylindrical portion 31a1 has a through hole 31a2 through which the rotary joint 37 extends along the A axis. The outer side surface of the housing 31a has a recess 31a3 through which a fluid-supply pipe and a current-supply cable extend. The outer side surface of the leg segment 30a has a side-surface cover 18a attached thereto. The recess 31a3 is covered with the side-surface cover 18a.

Fig. 3 illustrates the state in which the side-surface cover 18a is removed. Fig. 3(A) illustrates the state in which the cover 18a is removed from the leg segment 30a when viewed from the side farthest from the leg segment 30b, that is, when viewed from the outside. Fig. 3(B) illustrates the state in which a cover 18b is removed from the leg segment 30b when viewed from the side farthest from the leg segment 30a, that is, when viewed from the outside.

The rotary joint 37 includes a distributor 37a fixed to the housing 31a and a shaft 37b rotatably fitted around the outer peripheral surface of a cylindrical portion 37a1 of the distributor 37a.

In a state in which the distributor 37a extends through the through hole 31a2 of the housing 31a, a flange portion 37a2 of the distributor 37a is attached to the housing 31a with a plurality of screw members 37c arranged in the circumferential direction. Furthermore, the distributor 37a has at its center a through hole 37a4. For example, cables can extend through the through hole 37a4 toward the spindle unit 20.

The distributor 37a also has a plurality of fluid channels 37a3 that are arranged at different positions in the circumferential direction. The fluid channels 37a3 are provided for supplying or discharging fluid. The shaft 37b has a plurality of fluid channels 37b1 that correspond to the fluid channels 37a3 of the distributor 37a. In Fig. 2, only one of the fluid channels 37a3 and one of the fluid channels 37b1 are representatively shown.

The fluid channels 37a3 and the fluid channels 37b1 corresponding thereto communicate with each other through annular grooves formed continuously over the entire circumference of an engagement peripheral surface between the distributor 37a and the shaft 37b. This communication state is maintained even upon rotation of the shaft 37b. Furthermore, each of the fluid channels 37b1 communicates with a fluid supply or discharge port 24 of the spindle unit 20. The distributor 37a and the shaft 37b have seal members interposed therebetween for attaining a sealed state between the annular grooves.

The distributor 37a also has a plurality of fluid supply or discharge ports 37d arranged at different positions in the circumferential direction. Each of the ports 37d is connected to a fluid supply or discharge pipe 12. Fluid supplied from a fluid control circuit (not shown) through a supply pipe 12 is supplied from the rotary joint 37 to the spindle unit 20 through the corresponding port 24.

When the fluid is subjected to circulation, the fluid passing through the spindle unit 20 is discharged to a discharge pipe 12 through the rotary joint 37. The fluid to be supplied to the spindle unit 20 is, for example, cooling oil for cooling the spindle motor 25 or the spindle 21 that rotates at a high speed, sealing air for preventing cutting chips and powder from entering the spindle unit 20 and the rotating portion thereof, and cooling water for cooling the tool and the like used during machining.

The indexing motor 33 serves as an inner-rotor-type motor and includes the stator 33b disposed to be fixed with respect to the housing 31a, and the rotor 33a disposed to face the inner peripheral surface of the stator 33b. The rotor 33a is fitted around the outer periphery of a cylindrical portion 32a of the rotary shaft 32 and integrally attached with the cylindrical portion 32a. In particular, the motor 33 serves as a permanent magnet synchronous brushless DC motor configured as follows. In the rotor 33a of the motor 33, a plurality of magnetic poles, which are magnetic poles formed of permanent magnets made of a material such as rear-earth metal, are arranged in the circumferential direction such that the magnetic poles adjacent to each other in the circumferential direction are alternately reversed. In the stator 33b, a plurality of electromagnets, which generate magnetic forces when currents are applied thereto, are arranged in the circumferential direction corresponding to the magnetic poles of the rotor 33a. The rotor 33a is rotated by selectively applying currents to the electromagnets in the stator 33b.

The stator 33b is fitted into the inner peripheral surface of a stator sleeve 33c fixed to the housing 31a. The stator sleeve 33c has an annular groove 33c1 in the outer peripheral surface thereof. On the other hand, the housing 31a has a fluid supply path 31a4 and a fluid discharge path 31a5 that communicate with the annular groove 33c1. Cooling fluid (for example, oil) for cooling the motor 33 is supplied from the fluid supply path 31a4 toward the annular groove 33c1 so as to decrease heat generated by the motor 33 due to the rotation of the rotor 33a. The annular groove 33c1 has a helical shape so that when fluid is supplied from the fluid supply path 31a4, the fluid circulates the annular groove 33c1 so as to be discharged from the fluid discharge path 31a5 (although not shown specifically in the figures).

The rotor 33a is fitted around the outer peripheral surface of the rotary shaft 32 rotatably disposed within the housing 31a. The rotary shaft 32 is disposed concentrically with the rotary axis line of the shaft 37b of the rotary joint 37 and is fixed to the shaft 37b with a plurality of screw members arranged in the circumferential direction. The rotor 33a is disposed such that its outer peripheral surface faces the inner peripheral surface of the stator 33b. The rotor 33a is fitted around the outer peripheral surface of the cylindrical portion 32a of the rotary shaft 32 in a non-rotatable manner relative to the rotary shaft 32.

An end surface 32b of the rotary shaft 32 proximate to the leg segment 30b has the spindle unit 20 fixed thereto with a plurality of screw members 14 arranged in the circumferential direction. In other words, the spindle unit 20 is fixed to the end surface 32b of the rotary shaft 32 so as to be supported by the rotary shaft 32 in an integral manner. Consequently, in the leg segment 30a, the rotary shaft 32 and the shaft 37b of the rotary joint 37 rotating together with the rotary shaft 32 constitute a driving support shaft for the spindle unit 20.

In a state in which the rotary shaft 32 is joined to the shaft 37b of the rotary joint 37, the cylindrical portion 32a of the rotary shaft 32 surrounds the cylindrical portion 31a1 of the housing 31a with a slight gap interposed therebetween. In other words, in the state in which the rotary shaft 32 is joined to the shaft 37b, the cylindrical portion 31a1 of the housing 31a is disposed within the inner peripheral surface of the cylindrical portion 32a, i.e., within the rotor 33a in the radial direction, the rotor 33a fitted around the cylindrical portion 32a.

The cylindrical portion 31a1 of the housing 31a and the shaft 37b of the rotary joint 37 arranged within the through hole 31a2 of the cylindrical portion 31a1 have a bearing 35 interposed therebetween. The bearing 35 provides a state in which the shaft 37b is rotatably supported by the housing 31a.

As described above, in the illustrated embodiment, the driving support shaft (the shaft 37b of the rotary joint 37 and the rotary shaft 32 joined to the shaft 37b) includes a large-diameter section (the cylindrical portion 32a of the rotary shaft 32) around which the rotor 33a of the motor 33 is fitted, and a shaft section (the shaft 37b of the rotary joint 37) disposed within this large-diameter section in the radial direction and supported rotatably by the bearing 35. The cylindrical portion 31a1 of the housing 31a is disposed between the large-diameter section and the shaft section, and the bearing 35 is interposed between the cylindrical portion 31a1 and the shaft 37b. Accordingly, the driving support shaft is rotatably supported by the housing 31a. As shown in the figures, the positioning of the bearing 35 along the A axis is within a range occupied by the motor 33 along the A axis.

The inner configuration of the other leg segment 30b will be described below. The leg segment 30b has, as a main body, a housing 31b. The housing 31b includes, for example, the clamp mechanism 34 for holding the angular position of the spindle unit 20, the rotary shaft 39 that supports the spindle unit 20, a bearing 36 for rotatably supporting the rotary shaft 39, and a rotary joint 38. The housing 31b serves as a frame that receives the spindle unit 20 in a rotatable manner. The rotary shaft 39 serves as a driven support shaft during an indexing operation by the indexing motor 33. After the indexing operation, the rotary shaft 39 serves as a shaft for braking so as to hold the indexed angle during a clamping operation by the clamp mechanism 34.

The housing 31b has a through hole 31b1 extending therethrough along the A axis. The clamp mechanism 34, the rotary shaft 39 serving as the driven support shaft, the bearing 36, and the rotary joint 38 are accommodated within this through hole 31b1. The outer side surface of the housing 31b has a recess 31c1 similar to the leg segment 30a. The recess 31c1 is covered with the side-surface cover 18b.

The rotary joint 38 is similar to the rotary joint 37 of the leg segment 30a, and includes a distributor 38a fixed to the housing 31b and a cylinder-like portion 38b functioning as a cylinder section being integral with the rotary shaft 39 and rotatably fitted around the outer peripheral surface of a pressure-receiving cylindrical portion 38a1 of the distributor 38a.

The distributor 38a includes the above-described pressure-receiving cylindrical portion 38a1, and a flange portion 38a2 extending outward in the radial direction from the outer end part of the pressure-receiving cylindrical portion 38a1. The flange portion 38a2 of the distributor 38a is joined to the housing 31b with a plurality of screw members 38c arranged in the circumferential direction. Furthermore, the distributor 38a has at its center a through hole 38a4 extending along the A axis.

The distributor 38a has a plurality of fluid channels 38a3 arranged at different positions in the circumferential direction. The cylinder-like portion 38b has a plurality of fluid channels 38b1 that correspond to the fluid channels 38a3 of the distributor 38a. The fluid channels 38a3 and the fluid channels 38b1 corresponding thereto communicate with each other through annular grooves extending around an engagement peripheral surface between the distributor 38a and the cylinder-like portion 38b. This communication state is maintained even upon rotation of the cylinder-like portion 38b.

In the leg segment 30b, the rotary shaft 39 corresponding to the rotary shaft 32 of the leg segment 30a receives the bearing 36, and hence, the rotary shaft 39 includes two members of a shaft member 39a and a flange member 39b. The rotary shaft 39 (the shaft member 39a and the flange member 39b) is disposed such that the rotary axis line thereof is aligned with the axis line of the rotary shaft 32 in the leg segment 30a, and with the A axis.

The shaft member 39a of the rotary shaft 39 is arranged in the through hole 38a4 of the distributor 38a. The shaft member 39a is rotatably supported by the distributor 38a through the bearing 36. Thus, the shaft member 39a and the distributor 38a are arranged to be concentrically with the A axis.

The flange member 39b of the rotary shaft 39 has an end surface 39b1 at the side thereof proximate to the leg segment 30b. The end surface 39b1 is parallel to the end surface 32b of the rotary shaft 32 in the leg segment 30a. The end surface 39b1 has the spindle unit 20 fixed thereto with a plurality of screw members 15 arranged in the circumferential direction. Consequently, the rotary shaft 39 functions as the driven support shaft for the spindle unit 20 in the leg segment 30b. The flange member 39b of the rotary shaft 39 is fixed to the cylinder-like portion 38b of the rotary joint 38, and hence the rotary shaft 39 is rotated together with the cylinder-like portion 38b. Accordingly, the cylinder-like portion 38b of the rotary joint 38 is also a part of the driven support shaft.

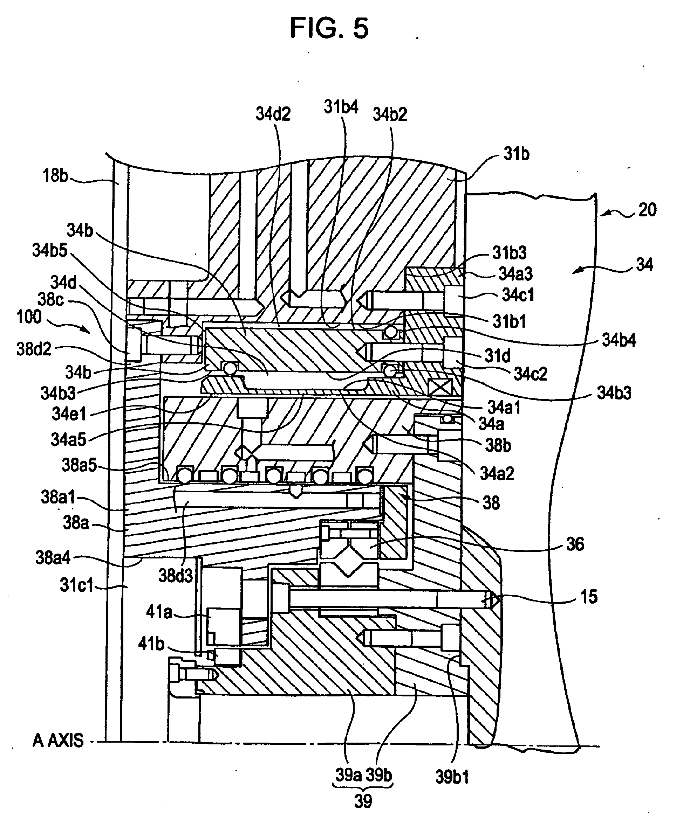

Referring to Figs. 2 and 5, the clamp mechanism 34 includes a ring-shaped clamp sleeve 34a as its primary portion to hold the rotated posture or the angular position of the spindle unit 20 after indexing. The clamp sleeve 34a includes a cylindrical portion 34a2 provided with an annular groove 34a1 serving as a pressure chamber 34d, and a flange portion 34a3 extending outward in the radial direction from the end part of the cylindrical portion 34a2 proximate to the leg segment 30a. In addition, the clamp sleeve 34a has a clamping through hole 34e1 within the clamp sleeve 34a. The through hole 34e1 is continuously arranged in an area occupied by the cylindrical portion 34a2 and the flange portion 34a3. The cylindrical portion 34a2 surrounds the cylinder-like portion 38b of the rotary joint 38, which is rotated together with the rotary shaft 39, in a manner such that the cylindrical portion 34a2 permits rotation of the cylinder-like portion 38b. The cylinder-like portion 38b extends through the clamping through hole 34e1 of the clamp sleeve 34a. The outer peripheral surface of the cylinder-like portion 38b faces the inner peripheral surface of the through hole 34e1 with a gap interposed therebetween.

The housing 31b has an attachment portion 31b3 continuously arranged from the through hole 31b1. The attachment portion 31b3 has a plane extending outward in the radial direction with respect to the A axis so as to receive the clamp sleeve 34a extending through the through hole 31b1. On the other hand, the flange portion 34a3 of the clamp sleeve 34a has a plurality of through holes to which screw members 34c2 are inserted when a pressure-receiving member 34b (described below) is attached, and a plurality of through holes to which screw members 34c1 are inserted when the clamp sleeve 34a is attached to the housing 31b. The through holes are arranged in the circumferential direction at an interval.

The cylindrical portion 34a2 of the clamp sleeve 34a and the through hole 31b1 of the housing 31b have a cylindrical pressure-receiving member 34b interposed therebetween. The pressure-receiving member 34b is fitted into the housing 31b. The pressure-receiving member 34b has a plurality of screw holes corresponding to the plurality of through holes in the flange portion 34a3. The cylindrical pressure-receiving member 34b is inserted to be fitted around the cylindrical portion 34a2 of the clamp sleeve 34a, and the screw members 34c2 are screwed into the corresponding screw holes of the pressure-receiving member 34b through the plurality of through holes of the flange portion 34a3.

As described above, the pressure receiving member 34b is fitted around the clamp sleeve 34a, houses the clamp sleeve 34a within a housing hole 31d serving as an intermediate hole. The pressure-receiving member 34b faces the annular groove 34a1 with the housing hole 31d interposed therebetween, and hence forms the pressure chamber 34d. The clamp sleeve 34a is fitted into the housing hole 31d. The pressure-receiving member 34b is fitted into the through hole 31b1. The attachment portion 31b3 of the housing 31b has a plurality of screw holes corresponding to the plurality of through holes provided in the circumferential direction of the pressure-receiving member 34b. The clamp sleeve 34a is attached to the attachment portion 31b3 by inserting the screw members 34c1 from the through holes of the flange portion 34a3 and screwing the screw members 34c1 into the screw holes. Thus, the clamp sleeve 34a is fixed to the housing 31b.

Shaft ends 34b4, 34b5 of the pressure-receiving member 34b have planes continuously arranged in the circumferential direction and extending in a direction orthogonal to the radial direction. The one shaft end 34b4 is arranged to engage with the flange portion 34a3 of the clamp sleeve 34a. At an inner peripheral end 34b3 of the pressure-receiving member 34b, O-rings are arranged at positions on both sides of the annular groove 34a1 in the axial direction over the entire circumference of the inner peripheral end 34b3. Accordingly, the pressure chamber 34d can hold an air-tight or liquid-tight state. Also, a fluid channel 34b1 provided in the pressure-receiving member 34b communicates with the pressure chamber 34d. The fluid channel 34b1 communicates with a fluid channel 31b2 provided in the housing 31b through a fluid channel 34a4 provided in the flange portion 34a3 of the clamp sleeve 34a.

In the clamp mechanism 34, when pressure fluid (for example, pressure oil) is supplied to the pressure chamber 34d through these fluid channels 34a4, 34b1, a thin-wall section 34a5 provided because of the annular groove 34a1 at the cylindrical portion 34a2 of the clamp sleeve 34a becomes deformed in a diameter-decreasing direction (inward in the radial direction). As a result, a clamping force acts on the cylinder-like portion 38b, and the cylinder-like portion 38b and the rotary shaft 39 joined thereto are prevented from rotating. Thus, the rotary shaft 39 becomes clamped.

When the pressure of the fluid (pressure oil) supplied to the pressure chamber 34d through a fluid control circuit (not shown) is released, the deformed state of the thin-wall section 34a5 of the cylindrical portion 34a2 is released, and the clamping force acting on the cylinder-like portion 38b is eliminated. Consequently, the clamped state of the rotary shaft 39 is released.

Further, in the embodiment shown in the figure, the leg segment 30b also includes a rotation detector 41 for detecting the rotational angle of the rotary shaft 39 (i.e., the posture of the spindle unit 20), and an angle detector 42 for limiting the rotational range of the spindle unit 20.

The rotation detector 41 includes a detector head 41a disposed within the through hole 38a4 of the distributor 38a of the rotary joint 38, at a predetermined position on a disc-shaped support portion protruding from the inner peripheral surface of the through hole 38a4 in the radial direction, and a detector ring 41b, which is attached to the shaft member 39a of the rotary shaft 39 and is disposed to face the inner side of the detector head 41a. A detection signal that is detected by the rotation detector 41 and indicates the angular position of the spindle unit 20 is sent to a control device (not shown) of the machine tool 1 on which the machining head 10 is mounted. The detection signal is used for posture control (numerical control) of the spindle unit 20.

The angle detector 42 is, for example, a limit switch, which is attached onto a support plate provided within the through hole 38a4 of the distributor 38a to face the peripheral surface of a disc-shaped member 43 attached to an end of the rotary shaft 39. The peripheral surface of the disc-shaped member 43 is provided with.a dog that corresponds to a permissible angle range. When the angle detector 42 faces the dog, the angle detector 42 is in an inoperative mode. Consequently, when the spindle unit 20 rotates to exceed a permissible angle due to, for example, control failure, the angle detector 42 detects that state and sends a detection signal to the control device of the machine tool 1 as, for example, an emergency stoppage signal.

As described above, the first support head component 30 includes the leg segments 30a, 30b that hold both sides of the spindle unit 20 in a rotatable manner. The one leg segment 30a includes the indexing motor 33 as the rotational drive source of the indexing device 100, so as to perform indexing for the spindle unit 20 around the A axis. The other leg segment 30b includes the clamp mechanism 34 belonging to the indexing device 100, so as to cause the spindle unit 20 after indexing to become clamped with the pressure fluid.

The pressure-receiving member 34b coaxially extends such that the shaft end 34b4 engages with the flange portion 34a3 of the clamp sleeve 34a and is attached to the flange portion 34a3 with the plurality of screw members 34c2 for clamping screwed into the plurality of screw holes provided in the flange portion 34a3. Also, the flange portion 34a3 of the clamp sleeve 34a is fixed to the attachment portion 31b3 of the housing 31b, and hence the flange portion 34a3 is non-movably attached to the housing 31b serving as the frame.

Thus, the pressure-receiving member 34b is attached to the housing 31b through the flange portion 34a3. The clamp sleeve 34a is arranged between the cylinder-like portion 38b integral with the shaft member 39a and the housing 31b provided outside the cylinder-like portion 38b.

Fig. 4 illustrates the configuration of the second support head component 50 in the machining head 10. Referring to Fig. 4, the second support head component 50 is attached to the ram 8. The second support head component 50 includes a housing 51 as a main body. The housing 51 has a through hole 51a that extends along the C axis so that the second support head component 50 causes the machining head 10 to be rotated (pivoted) around the C axis that is parallel to the Z axis of the machine tool 1. The second support head component 50 also includes a shaft portion 52a having a rotary shaft 52 for pivoting disposed within the through hole 51a.

The first support head component 30 is joined to the second support head component 50 through the rotary shaft 52. The second support head component 50 is attached to the ram 8 through an annular supporter 51b attached to the housing 51.

The second support head component 50 includes a motor 53 for pivoting, which uses a DD motor, to rotate the rotary shaft 52, a clamp sleeve 54 for pivoting to hold the rotational position of the rotary shaft 52 after pivoting, and a rotary joint 55 that supplies fluid to the first support head component 30, which are all disposed within the through hole 51a of the housing 51.

The motor 53 for pivoting includes a stator 53a fixed to the housing 51 through a stator sleeve 53c, and a rotor 53b fixed to the rotary shaft 52 at a position at which the rotor 53b faces the inner peripheral surface of the stator 53a. An exciting current for driving the motor 53 is supplied by a cable 17 connected to the stator 53a through a connector 17a.

The rotary shaft 52 for pivoting includes the shaft portion 52a disposed rotatably within the through hole 51a of the housing 51, and a flange member 52b attached to the end of the shaft portion 52a proximate to the first support head component 30 and extending outward in the radial direction (i.e., extending in directions perpendicular to the C axis). The rotary shaft 52 has a through hole 52c through which the rotary joint 55 extends.

As shown in the figure, the shaft portion 52a and the flange member 52b of the rotary shaft 52 have a bearing housing 52d therebetween. The bearing housing 52d and the housing 51 have a bearing 56 interposed therebetween. With the bearing 56, the rotary shaft 52 is supported in a rotatable manner relative to the housing 51. The bearing 56 in the illustrated embodiment is a triple cylindrical roller bearing (triple roller bearing/axial-radial roller bearing), which is a type of compound-roller pivot bearing, and is capable of receiving large amounts of load in the axial and radial directions.

The rotor 53b of the motor 53 is fitted around the outer peripheral surface of the shaft portion 52a. When the rotor 53b rotates, the shaft portion 52a is rotated around the C axis. The flange member 52b is joined to the shaft portion 52a with a plurality of screw members 52e arranged in the circumferential direction and thus rotates together with the shaft portion 52a. Furthermore, the flange member 52b has a plurality of screw members 19 arranged in the circumferential direction and screwed thereto. With the screw members 19, the supporting segment 30c of the first support head component 30 is joined to the flange member 52b. Accordingly, when the motor 53 rotates the rotary shaft 52, the first support head component 30 is pivoted together with the rotary shaft 52.

The rotary joint 55 is similar to the rotary joints 37, 38 in the first support head component 30, and includes a distributor 55a fixed to the housing 51 and a shaft 55b rotatably fitted into a through hole 55a1 provided in the distributor 55a and disposed concentrically with the distributor 55a along the C axis.

The distributor 55a is formed of a cylindrical portion 55a2 disposed within the through hole 52c of the rotary shaft 52, and a flange portion 55a3 extending outward in the radial direction from the end part of the cylindrical portion 55a2 farthest from the first support head component 30. The flange portion 55a3 of the distributor 55a is joined to the housing 51 with a plurality of screw members arranged in the circumferential direction.

Also, the shaft 55b is joined to a disc-shaped flange member 57 at the end thereof proximate to the first support head component 30. The shaft 55b is joined to the flange member 52b of the rotary shaft 52 through the flange member 57. Consequently, the shaft 55b rotates together with the rotary shaft 52. The flange member 57 has a shape that can be fitted into a circular recess 30c1 provided in the supporting segment 30c of the first support head component 30. With the flange member 57 and the recess 30c1 of the supporting segment 30c, the first support head component 30 and the second support head component 50 can be properly positioned with respect to each other when being joined to each other.

The distributor 55a has a plurality of fluid channels 55a4 arranged at different positions in the circumferential direction. The fluid channels 55a4 are provided for taking in fluid from the outside. On the other hand, the shaft 55b has a plurality of fluid channels 55b1 that correspond to the fluid channels 55a4 of the distributor 55a. The fluid channels 55b1 are arranged at different positions in the circumferential direction.

The fluid channels 55a4 and the fluid channels 55b1 corresponding thereto communicate with each other through annular grooves extending around an engagement peripheral surface between the distributor 55a and the shaft 55b. This communication state is maintained even when the shaft 55b is rotated. Also, the plurality of fluid channels 55b1 provided in the shaft 55b communicate with the corresponding fluid channels 37a3 or 38a3 provided in the distributor 37a or 38a of the rotary joint 37 or 38 of the first support head component 30. Accordingly, fluid supplied to the distributor 55a of the rotary joint 55 from the outside is sent to the rotary joints 37, 38 of the first support head component 30 through the shaft 55b.

The distributor 55a fixed to the housing 51 and the shaft portion 52a of the rotary shaft 52 have the clamp sleeve 54 disposed therebetween for holding the rotational position of the rotary shaft 52. The clamp sleeve 54 has a flange portion 54a at which the clamp sleeve 54 is joined to the distributor 55a with a plurality of screw members, and is rotatable relative to the rotary shaft 52. The clamp sleeve 54 has a cylindrical portion 54b provided with an annular groove 54c, which is open towards the cylindrical portion 55a2 of the distributor 55a. The annular groove 54c and the outer peripheral surface of the cylindrical portion 55a2 of the distributor 55a form a pressure chamber 54e.

When pressure fluid is supplied to the pressure chamber 54e through a fluid channel 54d provided in the distributor 55a, a thin-wall section of the cylindrical portion 54b, which corresponds to the annular groove 54c, is deformed in a diameter-increasing direction of the cylindrical portion 54b. As a result, a clamping force in the diameter-increasing direction acts on the rotary shaft 52, and the rotary shaft 52 is inhibited from rotating. Thus, the rotary shaft 52 becomes clamped.

In the illustrated embodiment, an upper end portion of the rotary joint 55 is provided with a rotation detector 44 for detecting the amount of rotation of the rotary shaft 52, namely, the amount of rotation of the first support head component 30. The rotation detector 44 includes a pair of detector heads 44a disposed at predetermined positions on the distributor 55a, and a detector ring 44b, which is attached to the shaft 55b rotatable together with the rotary shaft 52 so as to face the detector heads 44a. Similar to the rotation detector 41 in the first support head component 30, a detection signal of the rotation detector 44 is sent to the control device of the machine tool 1 and is used for rotation control of the first support head component 30.

In the machining head 10 having the above-described configuration, the first support head component 30 for supporting the spindle unit 20 pinches the spindle unit 20 between the rotary shafts 32, 39 of the pair of leg segments 30a, 30b so as to securely support the spindle unit 20 in a non-rotatable manner relative to the rotary shafts 32, 39. Since the driving rotary shaft 32 (the driving section) in the leg segment 30a is rotated by the indexing motor 33, the spindle unit 20 is rotated to the angular position to attain the desirable posture around the A axis of the rotary shafts 32, 39.

When the spindle 21 of the spindle unit 20 is driven to be positioned at a desirable angle around the A axis, the rotary shafts 32, 39 being integral with the spindle unit 20 are rotated by the indexing motor 33. The amount of rotation of the indexing motor 33 is controlled. The motor 33 is driven under the control with the control device of the machine tool 1 in accordance with numerical control based on a preliminarily set program. The rotation of the rotor 33a is controlled by selectively exciting an electromagnet (not shown) of the stator 33b. Accordingly, the angular position of the spindle unit 20 is controlled through the rotary shaft 32. Consequently, the motor 33 and the rotary shaft 32 (the driving section) linked with the motor 33 within the leg segment 30a function as the indexing device 100 for the spindle unit 20. An exciting current for driving the motor 33 is supplied by a cable 16 connected to the stator 33a of the motor 33 through a connector 16a.

As described above, when the rotation of the rotary shafts 32, 39 is completed by the motor 33 of the indexing device 100, and indexing is performed for the spindle unit 20 at a predetermined rotational angle, the clamp mechanism 34 of the indexing device 100 performs a clamping operation. For the clamping operation, the pressure chamber 34d is supplied with the pressure oil from the fluid control circuit (not shown) including, for example, a pressure fluid supply source and an on-off valve, through the fluid channels 31b2. At this time, the thin-wall portion 34a5 of the pressure chamber 34d bulges inward in the radial direction with respect to the A axis and presses an outer peripheral end 38b2 of the cylinder-like portion 38b. Accordingly, the rotary shaft 39 is held non-rotatably with respect to the housing 31b serving as the frame. Thus, the rotary shaft 39 becomes clamped.

By supplying pressure fluid during a clamping operation, the pressure of the fluid is applied to the pressure-receiving member 34b which is a part of the pressure chamber 34d. Accordingly, the pressure-receiving member 34b also bulges outward in the radial direction of the rotary shaft 39. However, since a predetermined gap 34d2 is provided between an inner peripheral surface 31b4 of the through hole 31b1 of the housing 31b and an outer peripheral end 34b2 of the pressure-receiving member 34b, no pressure force (interaction force) is applied to the through hole 31b1 of the housing 31b at least until the outer peripheral end 34b2 of the bulging pressure-receiving member 34b contacts the inner peripheral surface 31b4 of the through hole 31b1. With this structure, the rotary shaft 39 with the angle thereof indexed can be prevented from being inclined because of the clamping operation. Unless the above-described problem occurs, the pressure-receiving member 34b having the predetermined gap 34d2 does not have to be provided.

The configuration of the indexing device 100 according to the present invention will be described with reference to Fig. 5 on the basis of the description in claim 1. Fig. 5 illustrates enlarged part of the inside of the housing 31b located above the A axis in Fig. 2. Referring to Fig. 5, the indexing device 100 includes the rotary shaft 39 driven by the indexing motor 33 to perform indexing; the housing 31b having the housing hole 31d, in which the rotary shaft 39 is housed, and serving as the frame that supports the rotary shaft 39 in a rotatable manner; and the clamp sleeve 34a for a clamping operation. As described above, the clamp sleeve 34a has the through hole 34e1 and the annular groove 34a1 continuously provided around the outer periphery of the clamp sleeve 34a and defining a part of the pressure chamber 34d. The clamp sleeve 34a is disposed in the space between the housing hole 31d of the housing 31b and the rotary shaft 39. The clamp sleeve 34a is integrally attached to the housing 31b.

Also, the pressure-receiving cylindrical portion 38a1, which is separated from the through hole 34e1 of the clamp sleeve 34a in the radial direction and has the pressure-receiving peripheral surface 38a5 extending in parallel to the rotary shaft 39, is attached integrally to the housing 31b serving as the frame with a screw member 31c. On the other hand, the flange member 39b extending outward in the radial direction is attached integrally to the rotary shaft 39 with a screw member, and the cylinder-like portion 38b extending in parallel to the rotary shaft 39 is integrally attached to the flange member 39b with a screw member, in the space between the through hole 34e1 of the clamp sleeve 34a and the pressure-receiving cylindrical portion 38a1.

The cylinder-like portion 38b is constituted such that predetermined gaps are provided between the through hole 34e1 of the clamp sleeve 34a and the outer peripheral surface of the cylinder-like portion 38b, and between the inner peripheral surface of the pressure-receiving cylindrical portion 38a1 and the inner peripheral surface of the cylinder-like portion 38b. The predetermined gaps prevent the interruption of the rotation of the cylinder-like portion 38b (more specifically, the gaps each have a dimension ranging from a few dozen thousandths of millimeters to 1 millimeter).

The clamp mechanism 34 of the indexing device 100 is thus configured. When the clamp mechanism 34 is operated, as described above, the pressure fluid is supplied to the pressure chamber 34d, the clamp sleeve 34a bulges due to the supply, and the cylinder-like portion 38b is deformed toward the rotary shaft 39 in a bending manner. The rotary shaft 39 is pinched between the housing hole 31d of the housing 31b and the pressure-receiving cylindrical portion 38a1. Thus, the rotary shaft 39 after indexing becomes clamped.

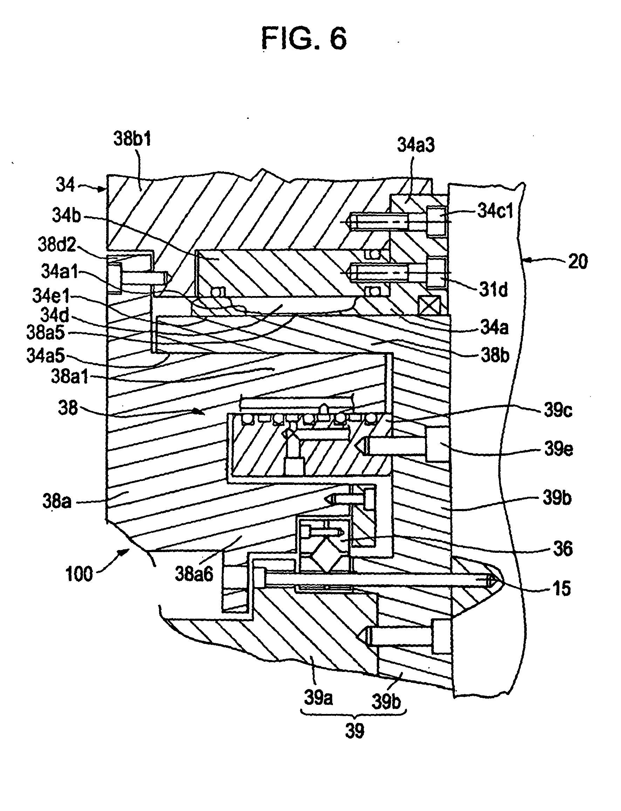

Fig. 6 illustrates a modification of the configuration illustrated in Figs. 2 to 5. The rotary joint 38 in Fig. 5 is formed between the cylinder-like portion 38b and the pressure-receiving cylindrical portion 38a1. In contrast, a rotary joint 38 in Fig. 6 is formed at the inner side in the radial direction, that is, at a position proximate to the A axis, the position located between the inner peripheral surface of the pressure-receiving cylindrical portion 38a1 and the outer peripheral surface of a cylindrical shaft 39c, which is integral with the flange member 39b of the rotary shaft 39.

More specifically, referring to Fig. 6, a distributor 38a having a flange portion 38d2 extending outward in the radial direction has two cylindrical portions separated from each other in the radial direction around the A axis. The two cylindrical portions include a pressure-receiving cylindrical portion 38a1 provided at the outer side in the radial direction, and a cylindrical portion 38a6. A cylindrical shaft 38c, which is integrally attached to the flange portion 39b of the rotary:shaft 39, extends through the space between the pressure-receiving cylindrical portion 38a1 and the cylindrical portion 38a6. The rotary joint 38 is defined by a channel, which communicates with the inner peripheral surface of the cylindrical portion 38a6 of the distributor 38a, and annular grooves, which are provided in the outer peripheral surface of the shaft 38c extending to be fitted into the channel.

That is, to define the rotary joint 38, the cylindrical shaft 39c having a predetermined thickness is arranged to contact the side surface of the flange member 39b farthest from the spindle, and is integrally attached thereto with a screw member 39e. Further, the cylinder-like portion 38b extending continuously around the A axis toward the shaft end (the side farthest from the spindle) along the A axis is provided between the pressure-receiving cylindrical portion 38a1 and the through hole 34a5 for clamping of the clamp sleeve 34a. The cylinder-like portion 38b is integral with the flange portion 39b. The cylinder-like portion 38b is constituted such that predetermined gaps are provided between the through hole 34e1 of the clamp sleeve 34a and the outer peripheral surface of the cylinder-like portion 38b, and between the outer peripheral surface of the pressure-receiving cylindrical portion 38a1 and the inner peripheral surface of the cylinder-like portion 38b. The predetermined gaps prevent the interruption of the rotation of the cylinder-like portion 38b.

With the embodiment in Fig. 6, as compared with the embodiment in Fig. 5, the annular groove for defining the rotary joint 38 is not formed in the cylinder-like portion 38b. Hence, the contact area of facing peripheral surfaces serving as clamping surfaces, between the inner peripheral surface of the cylinder-like portion 38b and the outer peripheral surface of the pressure-receiving cylindrical portion 38a1, is increased. Accordingly, a large clamping torque can be produced, and the components of the rotary joint 38 are located far from the position at which the clamping force of the clamp sleeve 34a is produced. The components of the rotary joint 38 can be prevented from being deformed. In other words, in this embodiment, the rotary joint is provided at a position different in the radial direction from the position of the pressure-receiving cylindrical portion that receives the pressing force from the clamp sleeve. Thus, a larger clamping force can be obtained, and the pressing force can be prevented from being directly applied to the rotary joint during a clamping operation.

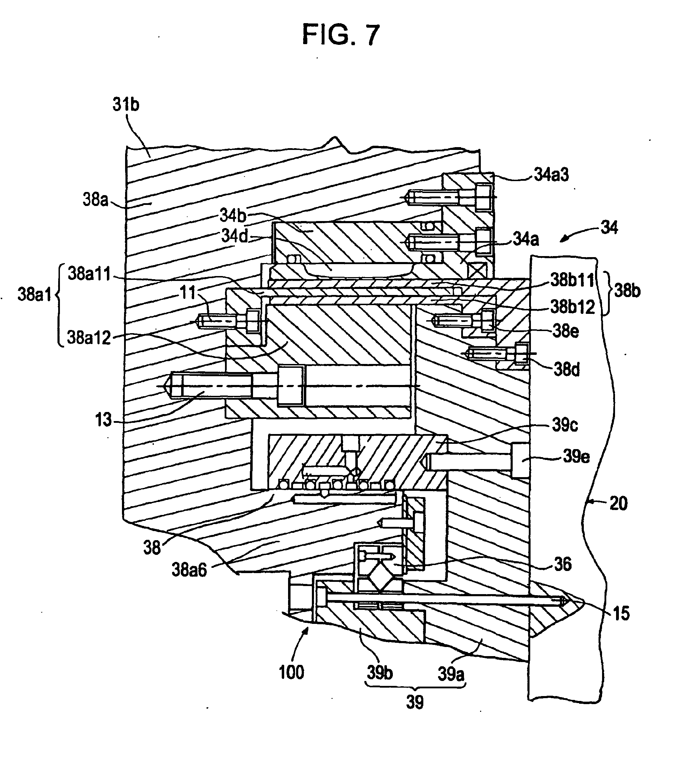

Fig. 7 is an embodiment corresponding to claim 2. A cylinder-like portion 38b and a pressure-receiving cylindrical portion 38a1 each include a plurality of parts. In this embodiment, the cylinder-like portion 38b includes two cylinder-like parts 38b11, 38b12, and the pressure-receiving cylindrical portion 38a1 includes two pressure-receiving cylindrical parts 38a11, 38a12. More specifically, referring to Fig. 7, the pressure-receiving cylindrical portion 38a provided within the clamping through hole 34e1 in the radial direction of the clamp sleeve 34a includes two cylinder-like parts including the pressure-receiving cylindrical part 38a12 provided at the inner side, and the pressure-receiving cylindrical part 38a11 separated from the outer peripheral end of the pressure-receiving cylindrical part 38a12 with a predetermined gap interposed therebetween and having a smaller thickness than the pressure-receiving cylindrical part 38a12.

On the other hand, the two cylinder-like parts 38b11, 38b12 respectively have cylindrical portions having different diameters and a predetermined reduced thickness, and proximal portions integral with the cylindrical portions and extending in the radial direction. The two cylinder-like parts 38b11, 38b12 have the center at the A axis, and attached to the flange member 39b with screw members 38e, 38d while the cylinder parts are separated from each other in the radial direction. To provide a space between the two pressure-receiving cylindrical parts 38a11, 38a12 and the distributor 38a, a recess is formed in the circumferential direction at the axial end side of the one pressure-receiving cylindrical part 38a12 so that the recess can receive a proximal part of the cylindrical part 38a11. While the proximal part of the cylindrical part 38a12 is housed in the recess, the pressure-receiving cylindrical parts 38a11, 38a12 are attached to the distributor 38a in the housing 31b with screw members 11, 13.

The cylinder-like parts 38b11, 38b12 and the pressure-receiving cylindrical parts 38a11, 38a12 are parallel to the A axis, extend in a direction in which the parts are mutually overlapped with each other, are provided alternately with slight gaps interposed therebetween, and are accommodated within the housing 31b. In this embodiment, similar to Fig. 6, the rotary joint 38 is provided at the inner side with respect to the pressure-receiving cylindrical part 38a12. The rotary joint 38 is formed between the inner periphery of the shaft 39c and the outer periphery of the cylinder-like portion 38b. This embodiment differs from the embodiment in Fig. 6 in that the distributor 38a is substantially integrally formed with the housing 31b.

Since the clamp sleeve 34a bulges inward in the radial direction during a clamping operation, the clamping force of the clamp sleeve 34a acts on the deformable cylinder-like part 38b11, pressure-receiving cylindrical part 38a11, and cylinder-like part 38b12, in that order described above. Then, the clamping force finally acts on the pressure-receiving cylindrical part 38a12. When the clamp sleeve 34a bulges, the pressure-receiving cylindrical parts 38b11 and 38b12, which are rotated with the rotary shaft 39, are clamped from both side among the clamp sleeve 34a attached to the housing 31b serving as the frame, the pressure-receiving cylindrical part 38a11, and the pressure-receiving cylindrical part 38a12. Consequently, the rotary shaft 39 integral with the cylinder-like portion 38b can be held non-rotatably.

With the embodiment in Fig. 7, when the clamp sleeve 34a bulges, four clamping surfaces (frictional surfaces) in total are provided by the clamp sleeve 34a, the two cylinder-like parts 38b11, 38b12, and the two pressure-receiving cylindrical parts 38a11, 38a12. A larger frictional torque (clamping force) can be provided than that of the other embodiments.

### Industrial Applicability

In the above-described embodiments, the clamp mechanism is provided only in one (driven support section) of the pair of leg segments that support the spindle unit 20 in the U-axis head of the machining head 10 for the machine tool 1. Alternatively, the clamp mechanism according to the present invention may be provided in the other (driving support section) with the DD motor of the leg segments. Still alternatively, the clamp mechanism may be provided in each of the leg segments.

Other indexing mechanism, for example, a clamp mechanism 54 of the second support head component 50 which rotates the first support head component 30 around the C axis may have the above-described configuration. The present invention is not limited to the U-axis head for the machining head 10 of the machine tool 1, and may be applied to an indexing device (rotary table) of a rotary table for retaining a workpiece subjected to machining. In the embodiments, while the drive source is the DD motor, the drive source may be other motor or rotary driving mechanism.

In the embodiment shown in Fig. 5, a mechanism that directly rotates the rotary shaft 39 is not provided in the housing 31b. However, like a rotary table of related art, a worm wheel may be integrally provided with a shaft member 39a that is integrally provided with a table, and for example, a worm that is coupled to a servomotor capable of controlling the amount of rotation may be meshed with the worm wheel. Alternatively, like the leg segment 30a in Fig. 2, a DD motor may rotate the rotary shaft 39 that is integrally provided with a table. A rotary table may not have a rotary shaft orthogonal to a bed of a machine tool. In particular, a rotary table may have an indexing function for rotary shafts of two or more axes, and a clamp device according to the present invention may be applied to at least one shaft of such rotary table.

## Claims

1. An indexing device (100) comprising: a rotary shaft (39) driven by an indexing motor (33) to perform indexing; a frame (31b) having a housing hole (31d), in which the rotary shaft (39) is housed, and rotatably supporting the rotary shaft (39); and a clamp sleeve (34a) having a clamping through hole (34e1), and an annular groove (34a1) continuously provided around an outer periphery of the clamp sleeve (34a) and defining a part of a pressure chamber (34d), which supplies pressure fluid, the clamp sleeve (34a) disposed in a space between the housing hole (31d) of the frame (31b) and the rotary shaft (39), the clamp sleeve (34a) integrally attached to the frame (31b),
**characterized in that**
a pressure-receiving cylindrical portion (38a1) is disposed in a space between the rotary shaft (39) and the clamp sleeve (34a) and integrally attached to the frame (31b), the pressure-receiving cylindrical portion (38a1) separated in a radial direction from the clamping through hole (34e1) of the clamp sleeve (34a) and having a pressure-receiving peripheral surface (38a5) extending in parallel to the rotary shaft (39), and wherein a flange member (39b) extending outward in the radial direction is integrally provided with the rotary shaft (39), and a cylinder-like portion (38b) is disposed in a space between the clamping through hole (34e1) of the clamp sleeve (34a) and the pressure-receiving cylindrical portion (38a1) and integrally attached to the flange member (39b), the cylinder-like portion (38b) extending in parallel to the rotary shaft (39) and being deformable in a bending manner.

2. The indexing device (100) according to claim 1, wherein the pressure-receiving cylindrical portion (38a1) integral with the frame (31b) includes a plurality of pressure-receiving cylindrical parts (38a11, 38a12), which are attached to the frame (31b) so as to be separated from each other in the radial direction, wherein the cylinder-like portion (38b) integral with the flange member (39b) includes a plurality of deformable cylinder-like parts (38b11, 38b12), which are attached to the flange member (39b) so as to be separated from each other in the radial direction, the cylinder-like parts (38b11, 38b12) being deformable in a bending manner, and wherein the pressure-receiving cylindrical parts (38a11, 38a12) and the deformable cylinder-like parts (38b11, 38b12) are alternately arranged with slight gaps interposed among the parts in the radial direction.

## Patentansprüche

1. Teiler-Vorrichtung (100) umfassend: eine Drehwelle (39), die über einen Schaltmotor (33) angetrieben ist, um ein Teilen durchzuführen; ein Gestell (31b) mit einer Gehäuseausnehmung (31d), in der die Drehwelle (39) aufgenommen ist, und das die Drehwelle (39) drehbar lagert; und eine Klemm-Hülse (34a) mit einer Klemm-Durchgangsöffnung (34e1), und eine ringförmige Ausnehmung (34a1), die fortlaufend um einen äußeren Umfang der Klemm-Hülse (34a) vorgesehen ist und die einen Teil einer DruckKammer (34d) definiert, die mit Druck beaufschlagtes Fluid zuführt, wobei die Klemm-Hülse (34a) in einem Raum zwischen der Gehäuse-Ausnehmung (31d) des Gestells (31b) und der Drehwelle (39) angeordnet ist, und wobei die Klemm-Hülse (34a) integral an dem Gestell (31b) befestigt ist,
**dadurch gekennzeichnet, dass**
ein Druck aufnehmender zylindrischer Bereich (38a1) in einem Raum zwischen der Drehwelle (39) und der Klemmhülse (34a) angeordnet ist und integral an dem Gestell (31b) befestigt ist, wobei der Druck aufnehmende zylindrische Bereich (38a1) in einer radialen Richtung von der Klemm-Durchgangsöffnung (34e1) der Klemm-Hülse (34a) getrennt ist und eine Druck aufnehmende Umfangsfläche (38a5) umfasst, die sich parallel zu der Drehwelle (39) erstreckt, und wobei ein Flansch-Element (39b), das sich in der radialen Richtung nach außen erstreckt, integral mit der Drehwelle (39) vorgesehen ist, und ein zylinderartiger Bereich (38b) in einen Raum zwischen der Klemm-Durchgangsöffnung (34e1) der Klemm-Hülse (34a) und dem Druck aufnehmenden zylindrischen Bereich (38a1) angeordnet ist und integral an dem Flanschelement (39b) befestigt ist, wobei sich der zylinderartige Bereich (38b) parallel zu der Drehwelle (39) erstreckt und in einer biegsamen Art und Weise deformierbar ist.

2. Teiler-Vorrichtung (100) gemäß Anspruch 1, bei der der Druck aufnehmende zylindrische Bereich (38a1) integral mit dem Gestell (31b) mehrere Druck aufnehmende zylindrische Elemente (38a11, 38a12) umfasst, die an dem Gestell (31b) derart befestigt sind, um voneinander in der radialen Richtung getrennt zu werden, wobei der zylinderartige Bereich (38b) integral mit dem Flanschelement (39b) mehrere deformierbare zylinderartige Elemente (38b11, 38b12) umfasst, die an dem Flanschelement (39b) derart befestigt sind, um voneinander in der radialen Richtung getrennt zu werden, wobei die zylinderartigen Elemente (38b11, 38b12) in einer biegsamen Art und Weise deformierbar sind, und wobei die Druck aufnehmenden zylindrischen Elemente (38a11, 38a12) und die deformierbaren zylinderartigen Elemente (38b11, 38b12) abwechselnd mit geringen Lücken dazwischen zwischen den Elementen in der radialen Richtung angeordnet sind.

## Revendications

1. Dispositif d'avancement (100) comprenant : un arbre rotatif (39) entraîné par un moteur d'avancement (33) pour procéder à un avancement ; un bâti (31b) possédant un trou de logement (31d) dans lequel vient se loger l'arbre rotatif (39) et supportant en rotation l'arbre rotatif (39) ; et un manchon de serrage (34a) possédant un trou de passage pour le serrage (34e1) et une rainure annulaire (34a1) prévue en continu autour de la périphérie externe du manchon de serrage (34a) et définissant une partie d'une chambre de pression (34d) qui alimente un fluide sous pression, le manchon de serrage (34a) étant disposé dans un espace ménagé entre le trou de logement (31d) du bâti (31b) et l'arbre rotatif (39), le manchon de serrage (34a) étant fixé à demeure au bâti (31b) ;
**caractérisé en ce qu'**une portion cylindrique de réception de la pression (38a1) est disposée dans un espace ménagé entre l'arbre rotatif (39) et le manchon de serrage (34a) tout en étant fixée à demeure au bâti (31b), la portion cylindrique de réception de la pression (38a1) étant séparée en direction radiale du trou de passage pour le serrage (34e1) du manchon de serrage (34a) et possédant une surface périphérique de réception de la pression (38a5) qui s'étend parallèlement à l'arbre rotatif (39), et dispositif dans lequel un membre (39b) faisant office de bride s'étendant vers l'extérieur en direction radiale est prévu en une seule pièce avec l'arbre rotatif (39) et dans lequel une portion de forme cylindrique (38b) vient se disposer dans un espace ménagé entre le trou de passage pour le serrage (34e1) du manchon de serrage (34a) et la portion cylindrique de réception de la pression (38a1), tout en étant fixée à demeure au membre (39b) faisant office de bride, la portion de forme cylindrique (38b) s'étendant parallèlement à l'arbre rotatif (39) et étant à même de se déformer par flexion.

2. Dispositif d'avancement (100) selon la revendication 1, dans lequel la portion cylindrique de réception de la pression (38a1) solidaire du bâti (31b) englobe plusieurs éléments cylindriques de réception de la pression (38a11, 38a12) qui sont fixés au bâti (31b) de façon à être séparés les uns des autres dans la direction radiale, la portion de forme cylindrique (38b) solidaire du membre (39b) faisant office de bride englobant plusieurs éléments déformables de forme cylindrique (38b11, 38b12) qui sont fixés au membre (39b) faisant office de bride de façon à être séparés les uns des autres dans la direction radiale, les éléments de forme cylindrique (38b11, 38b12) étant déformables par flexion, et dispositif dans lequel les éléments cylindriques de réception de la pression (38a11, 38a12) et les éléments déformables de forme cylindrique (38b11, 38b12) sont disposés en alternance, avec des petits espaces libres intercalés entre les éléments dans la direction radiale.
